Europäisches Patentamt

(19) European Patent Office

Office européen des brevets

(11) Numéro de publication : **0 026 140**
**B1**

(12) **FASCICULE DE BREVET EUROPÉEN**

(45) Date de publication du fascicule du brevet :
**19.12.84**

(21) Numéro de dépôt : **80401338.1**

(22) Date de dépôt : **19.09.80**

(51) Int. Cl.³ : **B 29 D 11/00**, B 29 C 17/03,
C 03 C 27/12, B 32 B 17/10,
B 32 B 31/00

(54) **Procédé et dispositif pour la fabrication de vitrages de sécurité de petites dimensions.**

(30) Priorité : **21.09.79 FR 7923510**

(43) Date de publication de la demande :
**01.04.81 Bulletin 81/13**

(45) Mention de la délivrance du brevet :
**19.12.84 Bulletin 84/51**

(84) Etats contractants désignés :
**AT BE CH DE GB IT LI LU NL SE**

(56) Documents cités :
FR-A- 1 599 971
FR-A- 2 404 502
GB-A-   321 189
US-A- 2 781 078
US-A- 3 322 598
US-A- 3 418 785
US-A- 3 462 909
US-A- 3 523 397

(73) Titulaire : **SAINT-GOBAIN VITRAGE**
**Les Miroirs 18, avenue d'Alsace**
**F-92400 Courbevoie (FR)**
**BE CH GB IT LI LU NL SE AT**
**VEGLA Vereinigte Glaswerke GmbH**
**Viktoria Allee 3-5**
**D-5100 Aachen (DE)**
**DE**

(72) Inventeur : **Ohlenforst, Hans**
**Im Johannistag 51**
**D-5100 Aachen (DE)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

## Description

L'invention concerne un procédé de fabrication de vitrages de petites dimensions selon le préambule de la revendication 1. L'invention concerne également des dispositifs pour la mise en œuvre de ce procédé.

Des vitrages en verre ou en matière plastique revêtus de couches de protection en matière plastique sont connus. Ces couches de protection peuvent remplir différentes fonctions.

Lorsqu'elles sont appliquées sur un verre de silicate, elles ont la fonction d'une couche de protection contre les éclats en cas de bris du vitrage, en protégeant notamment les yeux des morceaux de verre brisé ou des petits éclats de verre qui se détachent du vitrage. On dit que les couches ont des propriétés d'antilacération. Des verres de lunettes munis d'une couche de protection contre les éclats sont décrits par exemple dans la publication de brevet français 2 316 913.

Lorsque les couches de protection sont appliquées sur des vitrages en matière plastique transparente, notamment sur des verres de lunette en matière plastique, elles ont généralement la fonction d'améliorer les qualités de surface de ces vitrages. Des vitrages en matière plastique recouverts par des couches protectrices sont décrits par exemple dans la publication de brevet français 2 320 563.

De telles couches de protection doivent être résistantes à l'usage, en particulier elles doivent montrer une bonne résistance à la rayure. Etant donné qu'il est très difficile de fabriquer des couches ayant une surface extrêmement dure, on préfère fabriquer des couches de protection en un matériau hautement élastique ayant des propriétés d'autocicatrisation, c'est-à-dire sur lequel les empreintes superficielles disparaissent au bout d'un court laps de temps, par suite des seules qualités viscoélastiques dudit matériau.

Généralement, on fabrique des feuilles sous forme de bande que l'on revêt d'une couche de colle appropriée et on réalise les vitrages feuilletés par pressage des feuilles sur les vitrages. On décrit par exemple la fabrication de feuilles de matière plastique ayant des propriétés d'autocicatrisation et revêtues d'une couche de colle dans la publication de la demande de brevet français 2 398 606.

Dans cet état de la technique, chaque vitrage est fabriqué individuellement. On découpe la feuille en bande au format approximatif du vitrage et on assemble les deux éléments par pressage et utilisation de la chaleur.

Ce procédé de fabrication des vitrages n'est pas très économique dans le cas de petits vitrages. De plus, il nécessite plusieurs manipulations de la feuille préformée ce qui peut provoquer des altérations de celle-ci, notamment une perte de ses qualités optiques.

On connaît d'après le brevet US 3 322 598 un dispositif pour revêtir une pluralité de verres de lunettes par une feuille continue de matière plastique. La séparation des verres revêtus est réalisée après l'assemblage définitif. Ceci n'est pas entièrement satisfaisant car la découpe de la feuille de matière plastique peut entraîner un affaiblissement de l'adhésion entre la feuille de revêtement et le support.

L'invention a pour objet de procurer un procédé d'assemblage des vitrages en verre de petites dimensions avec des feuilles protectrices, d'une manière particulièrement économique et ne nécessitant qu'un minimum de manipulations pour obtenir un vitrage présentant une bonne adhésion. Cela est obtenu par les caractéristiques de la partie caractérisante de la revendication 1.

Dans un procédé du type selon lequel une pluralité de vitrages en verre disposés les uns à côté des autres, soutenus par un plateau support commun, sont assemblés en même temps avec une feuille de protection ayant la taille approximative du plateau support, et les vitrages revêtus de portions de la feuille sont séparés de la partie restante de la feuille, l'invention consiste à procéder à ladite séparation au cours de l'opération de pressage, en fin de l'opération d'application de la feuille sur les vitrages, et avant l'assemblage définitif utilisant la pression et éventuellement la chaleur.

Par le procédé selon l'invention, un grand nombre de petits vitrages sont revêtus, en une phase de travail unique, par la feuille de protection qui se présente encore au cours de l'application sous forme d'une feuille de grande surface ou d'une bande. On supprime ainsi non seulement toutes les phases de travail correspondant à la découpe de la feuille en morceaux, le transport de ces morceaux, leur stockage, leur application individuelle sur un vitrage, mais également le risque d'un affaiblissement de l'adhésion.

Le procédé selon l'invention peut être mis en œuvre de différentes façons, aussi bien en déposant tout d'abord sur le plateau support la feuille sous forme de bande avec la couche de colle disposée vers le dessus et ensuite en plaçant les vitrages sur cette feuille en bande, qu'en disposant d'abord sur le plateau support les petits vitrages avec leur face à revêtir orientée vers le haut et ensuite en appliquant sur les petits vitrages la feuille de protection munie sur sa face inférieure de la couche de colle.

Pour l'assemblage par pressage proprement dit, diverses méthodes peuvent être utilisées. On peut aussi bien utiliser la méthode selon laquelle l'air entre les vitrages et la feuille de protection est évacué par mise sous vide, la feuille de protection étant alors appliquée sur les vitrages par la pression atmosphérique, que la méthode selon laquelle l'air entre les vitrages et la feuille est refoulé au moyen d'une compression mécanique. Par toutes ces méthodes de pressage on peut obtenir une bonne adhésion et une liaison définitive entre le vitrage et la feuille de protection.

L'adhésion peut être encore éventuellement améliorée par un traitement complémentaire, par exemple dans un autoclave par action de la chaleur et de la pression, cela en outre de l'étape d'assemblage définitif mentionnée dans la revendication 1.

Dans le cas de l'assemblage par pressage avec évacuation de l'air entre les éléments à assembler par mise sous vide, on peut par exemple placer l'ensemble des vitrages à recouvrir et la feuille protectrice d'une taille sensiblement égale à celle du plateau support dans une chambre dans laquelle on peut faire le vide, tel un autoclave ou un sac flexible. De telles méthodes sont connues pour la fabrication de vitrages feuilletés formés de deux feuilles de verre et d'une couche intercalaire de matière plastique.

Dans ces procédés, l'aspiration peut être favorisée en intercalant une toile métallique à très petites mailles entre le plateau support et les vitrages ou bien un tissu en fibre de verre ou encore en utilisant un plateau support ayant une surface en relief. Ainsi, la surface du plateau support peut être munie, entre les supports de maintien des vitrages, de canaux tels que des stries ou des rainures pour l'évacuation de l'air situé entre les vitrages et la feuille de matière plastique.

Avantageusement, on assemble la feuille de protection avec les vitrages disposés à des endroits déterminés sur le plateau support par utilisation de corps creux à paroi élastique déformable qui pour chaque vitrage viennent appliquer tout d'abord la feuille de protection en leur centre, puis élargit leur surface de contact jusqu'aux bords des vitrages. On peut utiliser une ou plusieurs membranes élastiques déformables et mettre en jeu une pression pneumatique ou des corps creux sphériques à paroi élastique déformable et mettre en jeu une pression mécanique.

Les dispositifs plus spécialement adaptés pour la mise en œuvre du procédé selon l'invention sont ceux qui mettent en jeu la pression comprenant une partie supérieure de pressage adaptée au plateau support, formée à partir d'une plaque rigide présentant sur sa face inférieure des corps creux à paroi élastique déformable.

Les procédés et dispositifs selon l'invention peuvent être utilisés pour la fabrication de vitrages plans, à courbures cylindriques ou sphériques, en forme de lentilles à faces convexes ou concaves, en verre ou en matière plastique. Pour le revêtement de vitrages ayant une surface courbe, il est recommandé d'utiliser un plateau support présentant des cavités de forme correspondant à celle de la surface courbe des vitrages.

Lorsqu'on utilise un dispositif mettant en œuvre la pression, pour la mise en œuvre du procédé selon l'invention, on prévoit que celui-ci comporte une partie supérieure de pressage adaptée au plateau-support recevant la pluralité des vitrages disposés les uns à côté des autres, la partie supérieure étant formée d'une plaque rigide sur la face inférieure de laquelle sont disposés des corps creux périphériques avec une paroi élastique déformable, et conformément à l'invention, le plateau support ou la partie supérieure de pressage sont munis de couteaux de découpe dont la forme correspond à celle des vitrages à recouvrir et qui, dans la dernière phase de l'opération de pressage, séparent les portions de la feuille protectrice recouvrant les vitrages de la partie restante de cette feuille.

D'autres avantages et particularités de l'invention apparaîtront par la suite dans la description d'exemples de réalisation de l'invention faite en référence aux figures.

La figure 1 représente une coupe en élévation d'un dispositif d'assemblage ayant la forme d'une presse avec des moyens de pression pneumatiques pour le pressage de la feuille de protection.

La figure 2 est une partie agrandie de la figure 1 dans une position plus avancée de la partie supérieure de pressage.

La figure 3 est la même partie que la figure 2 mais en position de pressage.

La figure 4 est une représentation schématique du déroulement complet du cycle d'assemblage par pressage par la méthode utilisant une table rotative.

La figure 5 est une représentation schématique d'une ligne d'assemblage pour la mise en œuvre du procédé selon l'invention.

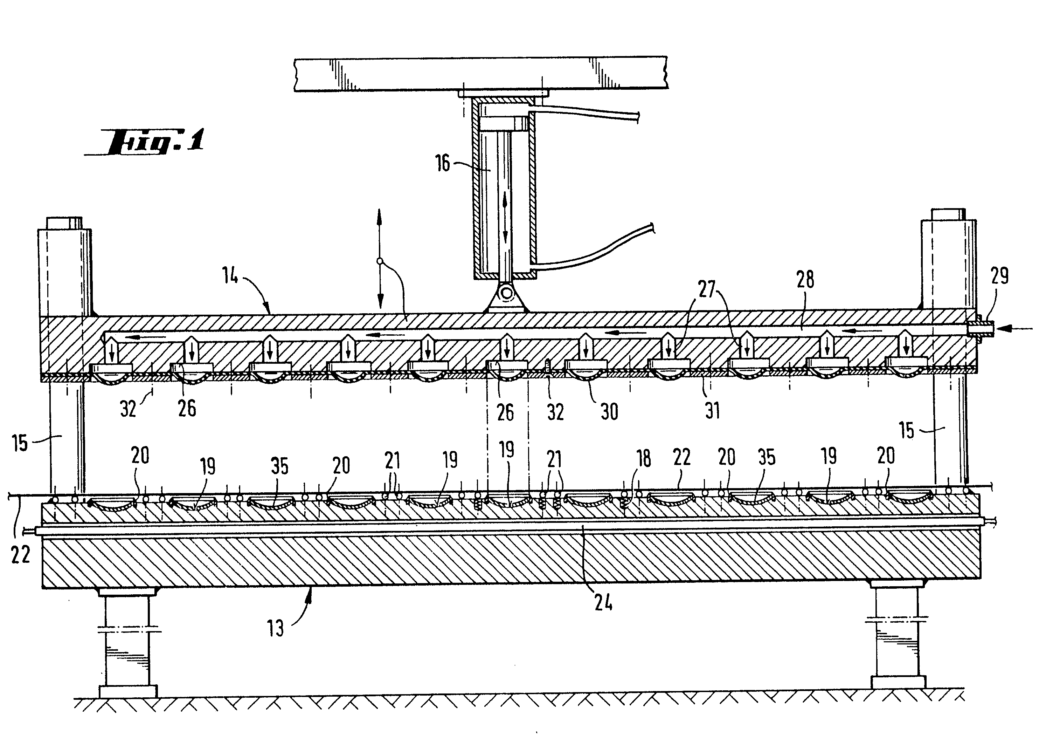

Les figures 1 à 3 représentent un dispositif dans lequel l'air entre les vitrages et la feuille de protection est expulsé sous pression. Le dispositif comprend un plateau support 13 formant la partie inférieure d'une presse et une partie supérieure de pressage 14. La partie supérieure peut coulisser le long des colonnes 15 sous l'action du vérin 16.

Le dispositif peut être utilisé pour recouvrir des vitrages à courbure sphérique par la feuille de protection. Dans ce but, le plateau support 13 comporte des cavités 19 en forme de cuvettes correspondant à la forme des vitrages qui reçoivent ceux-ci, déposés manuellement ou le cas échéant automatiquement à l'aide d'un dispositif annexe. Des couteaux de découpe 20 sont disposés dans le plateau support le long du bord des cuvettes 19 avec leur tranchant dirigé vers le haut à un niveau supérieur à celui du plateau support. Entre les cuvettes 19 se trouvent montés sur des ressorts 18 des rouleaux de glissement 21 supportant la feuille de protection 22, évitant ainsi le contact de cette dernière avec les tranchants des couteaux de découpe 20, tout en facilitant le placement de la feuille. Le plateau support peut être constitué d'un matériau bon conducteur de la chaleur, par exemple l'aluminium. A l'intérieur du plateau support 13 sont disposés des éléments de chauffage électrique 24 qui peuvent, réglés à l'aide d'un thermostat non représenté, porter le plateau support à la température désirée.

La partie supérieure 14 de pressage comprend essentiellement une plaque qui présente sur sa face inférieure, à l'aplomb des cuvettes 19, des cavités 26 cylindriques reliées par des conduits 27 et 28 à un ajutage 29 pour le passage de l'air comprimé. Les cavités 26 sont recouvertes d'une membrane 30 en matière extensible élastique. La membrane 30 est maintenue sur la face inférieure de la plaque 14 à l'aide d'une plaque trouée 31 fixée par des vis 32 sur la face inférieure de la plaque 14. Les trous de la plaque trouée 31 sont placés en coïncidence avec les cavités 26. Par conséquent, la membrane 30 obture de façon étanche, vers le bas, les cavités 26. Par introduction d'air comprimé, la membrane 30 se tend, de sorte qu'il se crée au-dessus des cuvettes 19 des corps de pressage à convexité sphérique orientée vers le bas comme représenté sur le dessin.

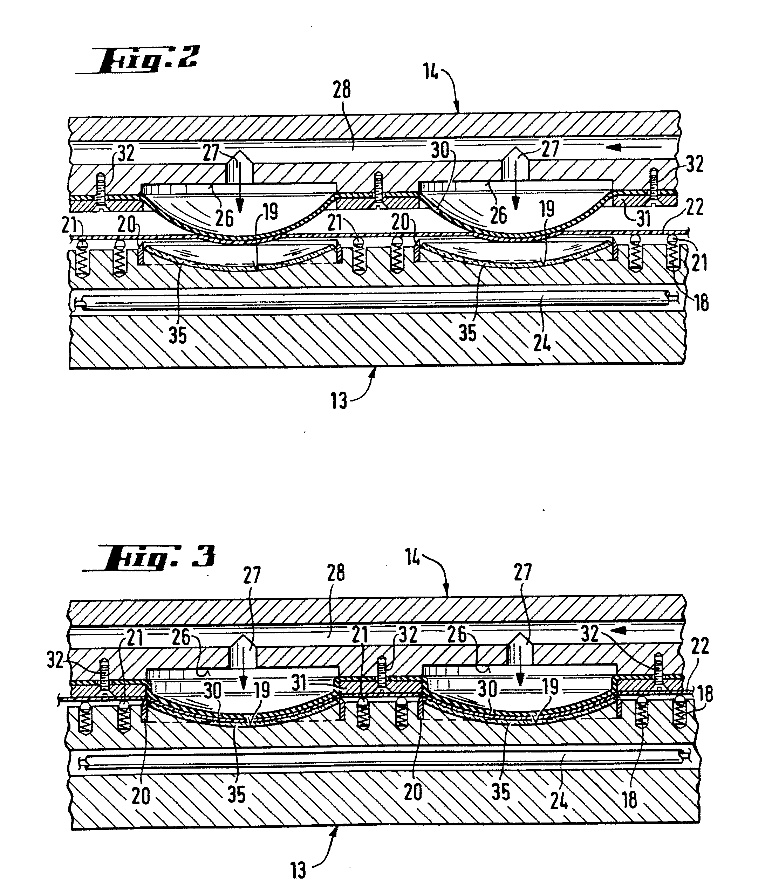

Lorsque les vitrages sont placés dans les cuvettes 19, une feuille protectrice, sous forme d'une bande, est tendue sur la totalité du plateau support 13. La partie supérieure de pressage 14 est ensuite abaissée à l'aide du vérin 16 en même temps qu'est ouverte la soupape de communication entre la partie supérieure de pressage et la source d'air comprimé, de sorte que l'air comprimé gonfle la membrane 30 au niveau des cavités 26 en l'arrondissant vers l'extérieur. En abaissant la partie supérieure pressante, les corps de pressage bombés de la membrane 30 viennent au contact de la feuille de protection 22 comme représenté sur la figure 2, le contact ayant lieu tout d'abord aux endroits les plus bas desdits corps. En continuant la descente de la partie supérieure de pressage, la feuille de protection 22 vient au contact des vitrages 35, tout d'abord en leur centre, puis la surface de contact s'élargit de façon concentrique au fur et à mesure du mouvement descendant. L'air entre la feuille et les vitrages est refoulé sur les côtés jusqu'à l'application totale de la feuille protectrice sur les surfaces de verre concaves.

La dernière phase du pressage est la séparation de la bande continue 22 des portions de feuille appliquées sur les vitrages 35. Cette phase est représentée sur la figure 3. La partie supérieure de la presse est à ce moment dans une position basse telle que la plaque 31 est au contact des tranchants des couteaux de découpe 20. La feuille est découpée suivant la périphérie des vitrages 35. Les rouleaux 21 de maintien et de glissement de la feuille, qui dans leur position normale, sont à un niveau supérieur à celui des couteaux de découpe 20, de sorte qu'ils évitent le contact de cette feuille avec les tranchants des couteaux, sont poussés vers le bas sous l'action de la plaque 31 et compriment les ressorts 18.

La partie supérieure pressante reste dans cette position extrême, en bout de course, durant quelques minutes environ pour assurer une bonne liaison entre les vitrages 35 et la feuille de protection 22 dont la face inférieure est munie d'une couche de colle activable par la chaleur et/ou la pression. Durant cette phase, la pression est maintenue dans la partie évidée de la partie supérieure pressante. La température réglée, nécessaire à l'adhésion, est maintenue dans le plateau support à l'aide des éléments chauffants 24. Les différents paramètres influant sur l'adhésion, à savoir notamment la pression, la température, la durée du pressage, sont fonction des propriétés de la feuille protectrice 22, ainsi que de la couche de colle placée sur la feuille face à la surface de verre. Lorsque la feuille protectrice et la colle sont celles décrites dans les publications de brevets français 2 320 563 et 2 398 606 déjà mentionnées, on utilise par exemple une pression de 12 bars dans les corps de pressage de la partie supérieure de pressage et une température du plateau support d'environ 375 K, ces conditions étant maintenues dans la presse pendant 10 minutes environ.

Après l'opération de pressage, la partie supérieure de pressage est relevée au moyen du vérin 16. Les vitrages revêtus par la feuille de protection sont retirés des cuvettes 19 du plateau support. La partie trouée restante de la feuille est retirée. La presse est prête pour un nouveau cycle de travail.

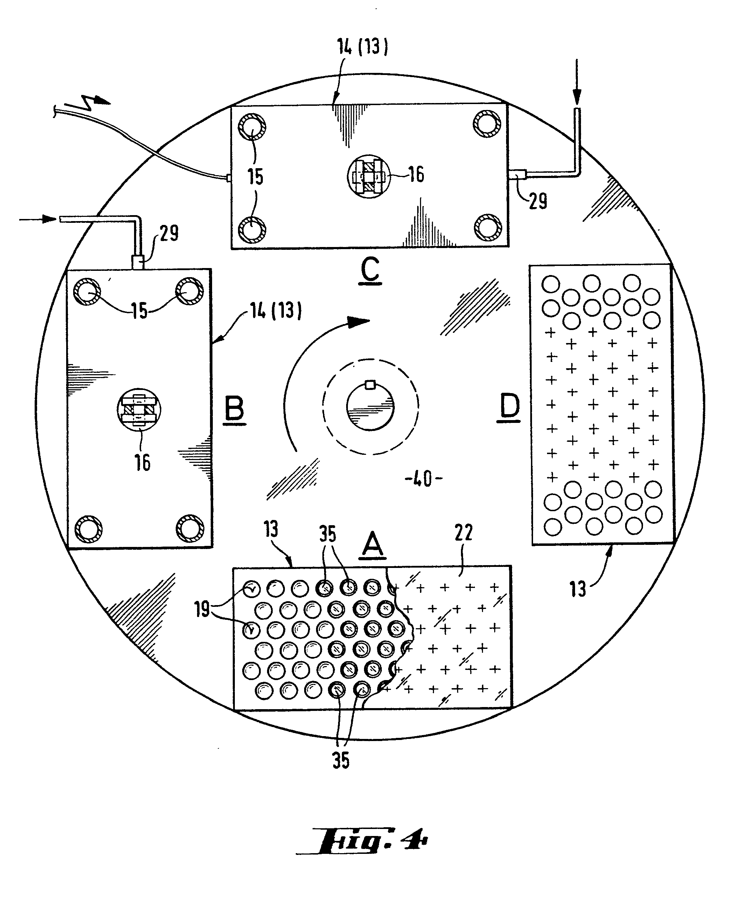

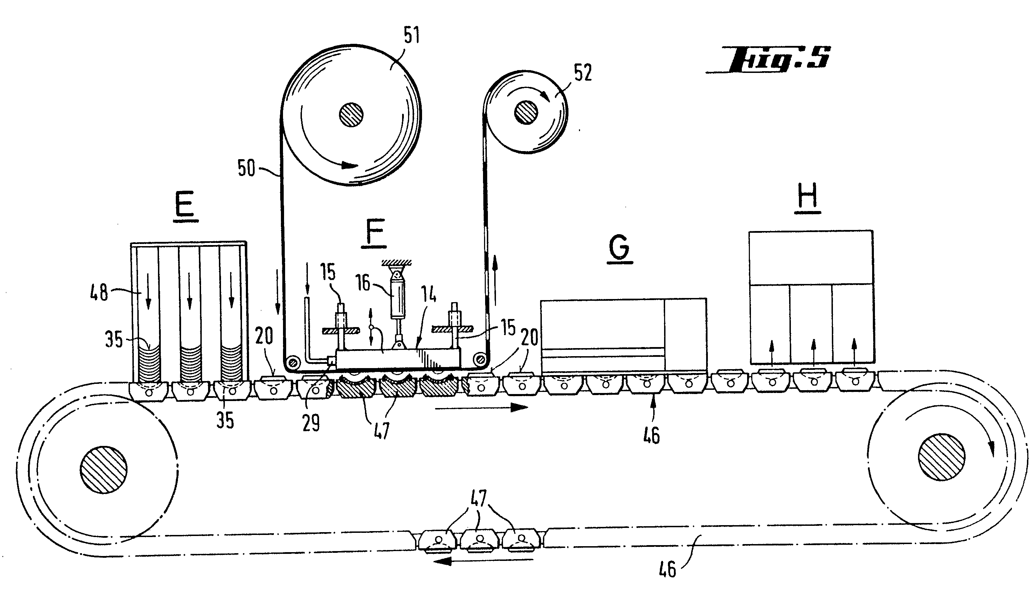

Les procédés décrits peuvent être utilisés dans une fabrication en continu. Dans ce cas, on utilise par exemple une table rotative comme représentée schématiquement sur la figure 4 ou encore une ligne d'assemblage comme représentée sur la figure 5.

La figure 4 représente une table rotative 40 automatique avec quatre stations correspondant à quatre postes de travail A, B, C, D. Sur la table rotative sont disposés quatre plateaux supports 13 de structure conforme à celle des plateaux comme représentée sur les figures 1 à 3. A la station A les vitrages sont disposés individuellement dans les cuvettes du plateau support 13 et une feuille de protection de la grandeur du plateau est étendue au-dessus des vitrages. Des parties supérieures de pressage sont montées au-dessus des stations B et C. Ces parties supérieures sont mobiles verticalement et ont la même structure que celle décrite en relation avec les figures 1 à 3. Dès que le plateau support, garni de vitrages au poste A, arrive au poste B, la partie supérieure de pressage montée à ce poste B est abaissée et vient appliquer la feuille sur les verres et provoquer la découpe des morceaux de la feuille. Après la découpe, la partie supérieure de pressage est relevée et la partie trouée restante de la feuille est retirée. La deuxième phase de l'adhésion de la feuille avec les vitrages s'effectue ensuite à la station C. Là, la partie supérieure de pressage s'y trouvant est abaissée sur le plateau support qui porte les vitrages revêtus de leur feuille de protection. L'opération d'assemblage par pressage est poursuivie par l'utilisation de la chaleur et de la pression jusqu'à l'obtention d'une liaison définitive de la surface en verre avec la feuille de protection. Les vitrages terminés sont retirés du plateau support à la station D. Le plateau est alors prêt pour la réception de nouveaux vitrages et le cycle peut recommencer.

La figure 5 représente un autre dispositif de fabrication automatique sous forme d'une ligne de fabrication. Dans ce dispositif, on utilise une chaîne à chaînons sans fin 46 dont chaque chaînon 47 présente la forme d'une cuvette pour la réception des vitrages à revêtir. La chaîne à chaînons 46 se déplace par intermittence avec des arrêts aux quatre stations E, F, G et H. A la station E, les vitrages à revêtir sont déposés automatiquement à partir du magasin 48 dans les cuvettes formées par les chaînons de la chaîne. Au poste F s'effectuent le pressage de la feuille de protection 50 sur les vitrages et la découpe à l'aide d'une partie supérieure de pressage de structure semblable à celle décrite en relation avec les figures 1 à 3. La feuille de protection 50 est dévidée du rouleau d'approvisionnement 51, tandis que la feuille restante trouée après la découpe est enroulée autour d'un rouleau 52. Les vitrages recouverts de la feuille de protection passent à travers un tunnel de chauffage, éventuellement terminé par un tronçon de refroidissement. C'est à cette station G que la liaison définitive est assurée. Les vitrages feuilletés fabriqués sont ensuite retirés des cuvettes au poste H.

**Revendications**

1. Procédé de fabrication de vitrages de petites dimensions, notamment des verres de lunettes, de sécurité, revêtus d'une feuille de protection (22) contre les éclats par application, par pressage et éventuellement action de la chaleur, de la feuille de protection munie éventuellement d'une couche de colle sur les vitrages, dans lequel une pluralité de vitrages (35) disposés les uns à côté des autres sur un même plateau-support (13), sont revêtus simultanément par une feuille de protection (22) de la taille du plateau support environ, et les vitrages revêtus sont séparés de la partie restante de la feuille de protection, caractérisé en ce que la feuille de protection (22) est découpée au format exact des vitrages au cours de l'opération de pressage, en fin de l'opération d'application de la feuille (22), sur les vitrages (35), et avant l'assemblage définitif utilisant la pression et éventuellement la chaleur.

2. Procédé selon la revendication 1, caractérisé en ce que la feuille de protection (22) est placée entre le plateau-support (13) et les vitrages (35) à revêtir.

3. Procédé selon la revendication 1, caractérisé en ce que la feuille de protection (22) est placée au-dessus des vitrages (35) disposés sur le plateau-support (13).

4. Procédé selon une des revendications 2 ou 3, caractérisé en ce que l'air compris entre les vitrages (35) et la feuille de protection (22) est évacué.

5. Procédé selon la revendication 4, caractérisé en ce que l'ensemble formé par le plateau support (13), les vitrages (35) et la feuille de protection (22), est placé dans une chambre sous vide telle un autoclave ou un sac flexible.

6. Dispositif pour la mise en œuvre du procédé selon une des revendications 1 à 5, comprenant une partie supérieure de pressage adaptée au plateau-support (13) de la pluralité des vitrages (35) et formée d'une plaque rigide (14) sur la surface inférieure de laquelle sont disposés des corps creux périphériques avec une paroi élastique déformable, caractérisé en ce que dans le plateau-support (13) ou dans la partie supérieure de pressage (14) sont disposés des couteaux de découpe (20) de la forme des vitrages (35) permettant de séparer les vitrages revêtus de la partie restante de la feuille de protection (22).

7. Dispositif selon la revendication 6, caractérisé en ce que sur la face inférieure de la partie supérieure pressante (14) sont disposées une ou plusieurs membranes élastiques (30) qui, après application de la partie supérieure pressante sur le plateau support, sont gonflées sphériquement par admission d'air sous pression sur les vitrages.

8. Dispositif pour la mise en œuvre du procédé selon une des revendications 1 à 5, caractérisé en ce que le plateau-support (13) est muni de cuvettes (19) pour le positionnement des vitrages.

9. Dispositif selon la revendication 8, caractérisé en ce que la forme des cuvettes (19) est celle des vitrages à revêtir.

10. Dispositif selon une des revendications 8 ou 9, caractérisé en ce que le plateau-support (13) peut être chauffé.

11. Dispositif selon une des revendications 6 à 10, caractérisé en ce que la face supérieure du plateau entre les supports pour le positionnement des vitrages comprend des canaux tels des stries ou des gorges pour l'évacuation de l'air compris entre les vitrages et la feuille de matière plastique.

**Claims**

1. Method of making safety glasses of small dimensions, notably lenses for spectacles, provided with a sheet (22) for protection against splinters, by pressing and optionally heating, of the protective sheet, which may be provided with an adhesive layer, against the glasses, in which a plurality of glasses (35) arranged side-by-side on a common support plate (13) are covered simultaneously with a protective sheet (22) of about the size of the support plate, and the covered glasses are separated from the remaining part of the protective sheet, characterised in that the protective sheet (22) is cut to the exact shape of the glasses during the pressing operation, at the end of the operation of applying the sheet (22) on to the glasses (35), and before final assembly using pressure and optionally heat.

2. Method according to claim 1, characterised in that the protective sheet (22) is placed between the support plate (13) and the glasses (35) to be covered.

3. Method according to claim 1, characterised in that the protective sheet (22) is placed above the glasses (35) arranged on the support plate (13).

4. Method according to claim 2 or 3, characterised in that air between the glasses (35) and the protective sheet (22) is removed.

5. Method according to claim 4, characterised in that the assembly formed by the support plate (13), the glasses (35) and the protective layer (22) is placed in a chamber such as an autoclave or a flexible bag, under vacuum.

6. Device for carrying out a method according to one of claims 1 to 5, comprising an upper pressing part complementary to the support plate (13) for the plurality of glasses (35) and formed of a rigid plate (14) on the lower surface of which are arranged hollow peripheral bodies with a deformable elastic wall, characterised in that in the support plate (13) or in the upper pressing part (14) there are arranged cutters (20) for cutting out to the shape of the glasses (35) allowing separation of the covered glasses from the remaining part of the protective sheet (22).

7. Device according to claim 6, characterised in that on the lower surface of the upper pressing part (14) there are arranged one or more elastic membranes (30) which, after application of the upper pressing part on the support plate, are inflated spherically by admission of air under pressure on to the glasses.

8. Device for carrying out a method according to any one of claims 1 to 5, characterised in that the support plate (13) is provided with cavities (19) for positioning of the glasses.

9. Device according to claim 8, characterised in that the shape of the cavities (19) is that of the glasses to be covered.

10. Device according to one of claims 8 and 9, characterised in that the support plate may be heated.

11. Device according to one of claims 6 to 10, characterised in that the upper surface of the plate between the supports for positioning the glasses comprises ducts such as striations or grooves for removal of air between the glasses and the sheet of plastics material.

**Ansprüche**

1. Verfahren zur Herstellung von Sicherheitsglasscheiben kleiner Abmessungen, insbesondere Brillengläsern, die mit einer gegebenenfalls mit einer Kleberschicht versehenen und durch Aufpressen ggf. unter Wärmeeinwirkung aufgebrachten Splitterschutzfolie (22) versehen sind, bei dem eine Mehrzahl von Glasscheiben (35) nebeneinander auf einer Trägerplatte (13) angeordnet und gleichzeitig mit einer etwa die Größe der Trägerplatte aufweisenden Schutzfolie (22) versehen werden, und die mit der Schutzfolie versehenen Glasscheiben aus dem übrigen Teil der Schutzfolie herausgetrennt werden, dadurch gekennzeichnet, daß die Schutzfolie (22) während des Pressens am Ende des Vorgangs zum Aufbringen der Schutzfolie (22) auf die Glasscheiben (35) und vor der endgültigen Verbindung unter Anwendung von Druck und gegebenenfalls Wärme auf das genaue Maß der Glasscheiben geschnitten wird.

2. Verfahren nach Anspruch 1, dadurch gekennzeichnet, daß die Schutzfolie (22) zwischen der Trägerplatte (13) und den mit der Schutzfolie zu versehenden Glasscheiben (35) angeordnet wird.

3. Verfahren nach Anspruch 1, dadurch gekennzeichnet, daß die Schutzfolie (22) oberhalb der auf der Trägerplatte (13) angeordneten mit der Schutzfolie (22) zu versehenden Glasscheiben (35) angeordnet wird.

4. Verfahren nach Anspruch 2 oder 3, dadurch gekennzeichnet, daß die zwischen den Glasscheiben (35) und der Schutzfolie (22) eingeschlossene Luft entfernt wird.

5. Verfahren nach Anspruch 4, dadurch gekennzeichnet, daß die von der Trägerplatte (13), den Glasscheiben (35) und der Schutzfolie (22) gebildete Einheit in eine Unterdruckkammer wie einen Autoklaven oder einen flexiblen Sack gelegt wird.

6. Vorrichtung zur Durchführung des Verfahrens nach einem der Ansprüche 1 bis 5, mit einem Pressenoberteil, das an die von einer starren Platte (14) gebildeten Trägerplatte für die Mehrzahl der Glasscheiben (35) angepaßt ist und auf dessen unterer Seite sphärische Hohlkörper mit einer elastisch deformierbaren Wand angeordnet sind, dadurch gekennzeichnet, daß in der Trägerplatte (13) oder in dem Pressenoberteil (14) Schneidmesser (20) angeordnet sind, die die Form der Glasscheiben (35) aufweisen und das Herausschneiden der mit der Schutzfolie versehenen Glasscheiben aus dem übrigen Teil der Schutzfolie (22) ermöglichen.

7. Vorrichtung nach Anspruch 6, dadurch gekennzeichnet, daß auf der Unterseite des Pressenoberteils (14) eine oder mehrere elastische Membranen (30) angeordnet sind, die nach Absenken des Pressenoberteils auf die Trägerplatte durch Zufuhr von Druckluft sich sphärisch gegen die Glasscheiben aufblähen.

8. Vorrichtung zur Durchführung des Verfahrens nach einem der Ansprüche 1 bis 5, dadurch gekennzeichnet, daß die Trägerplatte (13) mit Mulden (19) für die Positionierung der Glasscheiben versehen ist.

9. Vorrichtung nach Anspruch 8, dadurch gekennzeichnet, daß die Mulden (19) die Form der mit der Schutzfolie zu versehenden Glasscheiben aufweisen.

10. Vorrichtung nach Anspruch 8 oder 9, dadurch gekennzeichnet, daß die Trägerplatte (13) heizbar ist.

11. Vorrichtung nach einem der Ansprüche 6 bis 10, dadurch gekennzeichnet, daß die obere Seite der Trägerplatte zwischen den Auflagern für die Positionierung der Glasscheiben Kanäle, wie Rillen oder Auskehlungen, dür die Entfernung der zwischen den Glasscheiben und der Kunststoffolie eingeschlossenen Luft aufweist.

Fig.1

**Fig. 2**

**Fig. 3**

**Fig. 4**

Fig. 5

0 026 140